# EUROPEAN PATENT SPECIFICATION

(11) **EP 0 507 999 B1**
(45) Date of publication and mention of the grant of the patent: **08.11.1995**
(21) Application number: 91203317.2
(22) Date of filing: 16.12.1991
(51) Int. Cl.: B08B 15/00, B23K 9/32

(54) **Fume exhaust device**
Vorrichtung zum Absaugen von Abgasen
Dispositif pour évacuer des buées

(30) Priority: 14.12.1990 NL 9002761
(43) Date of publication of application: 14.10.1992
(73) Proprietor: INDUSTRIAL DEVELOPMENT HEERENVEEN B.V., NL-8441 PN Heerenveen (NL)
(72) Inventor: Knijpstra, Hette, NL-8449 EC Terband (NL)
(74) Representative: Smulders, Theodorus A.H.J., Ir.

(56) References cited:
- WO-A-88/09227
- CA-A- 1 186 022
- DE-A- 2 428 135
- DE-A- 3 434 519
- DE-A- 3 730 273
- DE-A- 3 841 842
- DE-C- 30 845
- DE-C- 3 606 308
- US-A- 3 926 104
- US-A- 4 086 847

## Description

The invention relates to a device for exhausting air from a workshop, in particular welding fumes, comprising at least one exhaust hood connected through flexible tube means to rigid tube means.

Such a device is disclosed in DE-A-3434519. The known device comprises a hood connected to a flexible hose suspended from an overhead rail and connected to a rigid tube. The rigid tube is connected to a fan which is either carried by a welding trolley or mounted on the floor. In the latter case a welding trolley is still present. Thus the welder may move along a substantially linear path below the overhead rail while pulling along the hood and the welding trolley.

DE-A-3606308 discloses a rather heavy welding trolley to be moved over the floor and provided with an air cleaning filter device and flexible tube means connected to a hood for extracting welding fumes.

US-A-3926104 discloses an air purifier device mounted on a boom secured to a column. The purifier device is movable along the boom to position the device above a workpiece to be welded. A separate welding trolley is needed but US-A-3926104 also discloses an embodiment in which a welding trolley to be moved over the floor is provided with a mast to which a boom carrying the air purifier device is secured.

It is an object of the present invention to provide a device which is suitable for exhausting locally throughout a workshop fumes and the like produced for instance during welding operations and which is easy to handle and flexible in use.

To that end a device of the type described above is characterized in that the rigid tube means comprises a substantially vertically suspended tube, which near its lower end is provided with a rotatable hollow sleeve to which the flexible tube means are connected, and which further near its lower end is provided with means for carrying a welding cable reel or the like.

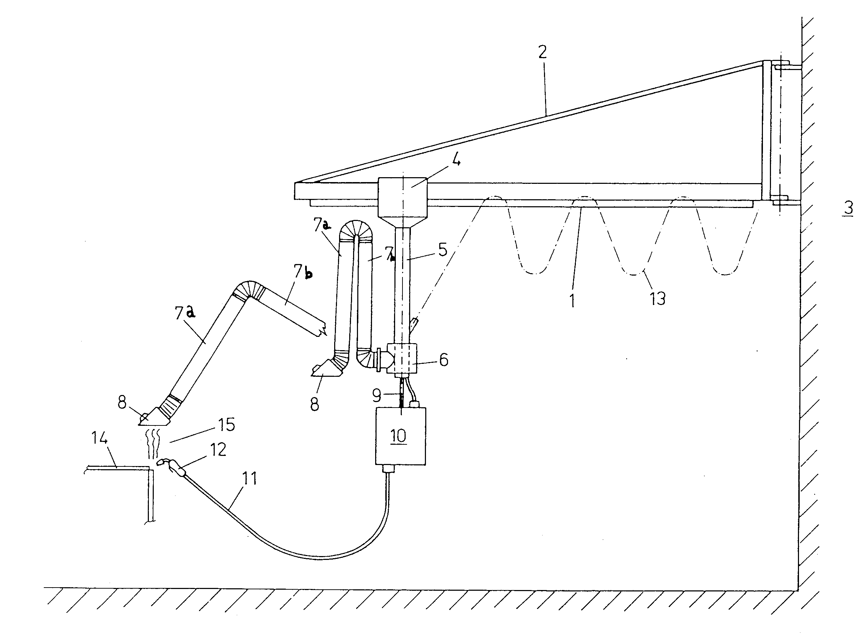

To clarify the invention, one embodiment of a fume exhaust device will now be described, by way of example, with reference to the accompanying drawing showing a diagrammatic side elevation. Referring to the drawing, there is shown a fume exhaust device comprising a rail 1 with a suction tube pivotally connected to a wall 3 by means of a triangle 2. Connected to rail 1 by means of a connecting head 4 adapted for sliding movement along the rail 1 is a vertical rigid tube 5. The lower end of the rigid tube 5 is provided with a rotatable hollow sleeve 6 mounted for rotation through 360° about the rigid tube 5 in a known manner. Connected to sleeve 6 are a plurality of hingedly interconnected tube sections 7a, 7b. The last tube section 7a can have fume exhaust hood 8 mounted on its free end.

The closed lower end of the rigid tube 5 comprises a chain 9 that can be extended in a manner not shown, having a hose reel 10 connected to its free end. Issuing from the hose reel 10 is a supply hose 11 for welding wire and current supply wires (not separately shown). This assembly terminates in a welding gun 12. The above-mentioned current supply wires, not separately shown, are supplied from a fixed wall socket (not shown) via cable 13 (shown in chain-dotted lines) suspended in loops, to the top of the rotatable hollow sleeve 6, so that rotation of sleeve 6 through 360° will not cause the current supply wire and the like to twist.

The drawing further shows in part an extended position of the tube sections 7a, 7b and the fume exhaust hood 8 mounted at the free end thereof. The pipe sections are a plurality of hingedly interconnected rigid tube sections provided with means (not shown) for arresting the tube sections in any relative hinged position. Disposed near the welding gun 12 is a diagrammatically shown workpiece 14, releasing welding fumes 15 which are immediately removed via the fume exhaust hood 8.

It is observed that after the foregoing, various constructional modifications will readily occur to those skilled in the art. Further, a device according to the invention can also be used to exhaust fumes and/or dust clouds produced during processes other than welding. Such modifications are understood to fall within the framework of the invention, as defined by the appended claims.

## Claims

1. A device for exhausting air from a workshop, in particular welding fumes, comprising at least one exhaust hood (8) connected through flexible tube means (7a,7b) to rigid tube means, **characterized** in that the rigid tube means comprises a substantially vertically suspended tube (5), which near its lower end is provided with a rotatable hollow sleeve (6) to which the flexible tube means (7a,7b) are connected, and which further near its lower end is provided with means (9) for carrying a welding cable reel (10) or the like.

2. A device as claimed in claim 1, **characterized** in that the upper end of the vertical tube (5) is connected to a transversely extending suction tube/rail combination (1) wherein the vertical tube (5) is movable along said suction tube/rail combination (1).

3. A device as claimed in claim 1 or 2, **characterized** by passage means provided at least at the lower end of the vertical tube (5) for guiding at least one supply line necessary for welding through the vertical tube (5).

4. A device as claimed in any one of claims 1-3, **characterized** in that the lower end of the vertical tube (5) is closed and in that the means (9) for carrying a welding cable reel or the like comprises a chain connected to said closed lower end of the vertical tube (5).

5. A device as claimed in any one of claims 1-4, **characterized** in that the means (9) for carrying a welding cable reel (10) or the like allows vertical displacement of the welding cable reel or the like relative to the lower end of the vertical tube (5).

6. A device as claimed in any one of claims 1-5, **characterized** in that the flexible tube means (7a,7b) comprise a plurality of hingedly interconnected rigid tube sections (7a,7b) and in that means are provided for arresting the tube sections (7a,7b) in any hinged position.

## Patentansprüche

1. Vorrichtung zum Absaugen von Luft aus einer Werkstatt, insbesondere von Schweißabgasen, versehen mit mindestens einer Absaughaube (8), die durch flexible Rohre (7a, 7b) mit einem steifen Rohr verbunden ist, dadurch gekennzeichnet, daß das steife Rohr ein im wesentlichen vertikal aufgehängtes Rohr (5) umfaßt, das nahe seinem unteren Ende mit einer drehbaren Hohlbuchse (6) versehen ist, mit der die flexiblen Rohre (7a, 7b) verbunden sind, und das weiter nahe seinem unteren Ende mit einem Organ (9) zum Tragen einer Schweißkabelhaspel (10) oder dergleichen versehen ist.

2. Vorrichtung nach Anspruch 1, dadurch gekennzeichnet, daß das obere Ende des vertikalen Rohres (5) mit einem sich quer erstreckenden Saugrohr mit Schiene (1) verbunden ist, wobei das vertikale Rohr (5) an dem Saugrohr mit Schiene (1) entlang bewegbar ist.

3. Vorrichtung nach Anspruch 1 oder 2, gekennzeichnet durch einen mindestens am unteren Ende des vertikalen Rohres (5) vorgesehenen Durchgang zum Hindurchführen mindestens einer zum Schweißen erforderlichen Speiseleitung durch das vertikale Rohr (5).

4. Vorrichtung nach einem der Ansprüche 1 bis 3, dadurch gekennzeichnet, daß das untere Ende des vertikalen Rohres (5) geschlossen ist und daß das Organ (9) zum Tragen einer Schweißkabelhaspel oder dergleichen eine mit dem geschlossenen unteren Ende des vertikalen Rohres (5) verbundene Kette umfaßt.

5. Vorrichtung nach einem der Ansprüche 1 bis 4, dadurch gekennzeichnet, daß das Organ (9) zum Tragen einer Schweißkabelhaspel (10) oder dergleichen eine vertikale Bewegung der Schweißkabelhaspel oder dergleichen relativ zum unteren Ende des vertikalen Rohres (5) gestattet.

6. Vorrichtung nach einem der Ansprüche 1 bis 5, dadurch gekennzeichnet, daß die flexiblen Rohre (7a, 7b) mehrere gelenkig miteinander verbundene steife Rohrabschnitte (7a, 7b) umfassen und daß Mittel zum Arretieren der Rohrabschnitte (7a, 7b) in jeder Gelenkstellung vorgesehen sind.

## Revendications

1. Dispositif d'évacuation de l'air d'un atelier, en particulier de fumées de soudure, comprenant au moins un capot d'échappement (8) raccordé par des tubes flexibles (7a, 7b) à des tubes rigides, caractérisé en ce que les tubes rigides comprennent un tube suspendu de manière essentiellement verticale (5) qui est muni, à proximité de son extrémité inférieure, d'un manchon creux rotatif (6) auquel les tubes flexibles (7a, 7b) sont raccordés et qui est muni par ailleurs, à proximité de son extrémité inférieure, de moyens (9) pour transporter une bobine de câble de soudure (10) ou autres.

2. Dispositif selon la revendication 1, caractérisé en ce que l'extrémité supérieure du tube vertical (5) est raccordée à un combiné rail/tube d'aspiration s'étendant transversalement (1) dans lequel le tube vertical (5) est mobile le long dudit combiné (1) rail/tube d'aspiration.

3. Dispositif selon l'une des revendications 1 ou 2, caractérisé par le des moyens de passage prévus au moins à l'extrémité inférieure du tube vertical (5) pour guider au moins une conduite d'alimentation nécessaire pour le soudage à travers le tube vertical (5).

4. Dispositif selon l'une quelconque des revendications 1 à 3, caractérisé en ce que l'extrémité inférieure du tube vertical (5) est fermée et en ce que les moyens (9) pour porter une bobine de câble de soudage ou autre se compose d'une chaîne raccordée à ladite extrémité inférieure fermée du tube vertical (5).

5. Dispositif selon l'une quelconque des revendications 1 à 4, caractérisé en ce que les moyens (9) pour porter une bobine de câble de soudure (10) ou autres permettent un déplacement vertical de la bobine de câble de soudure ou autre par rapport à l'extrémité inférieure du tube vertical (5).

6. Dispositif selon l'une quelconque des revendications 1 à 5, caractérisé en ce que les tubes flexibles (7a, 7b) se composent de plusieurs sections tubulaires (7a, 7b) rigides articulées en ce que des moyens sont prévus pour bloquer les sections tubulaires (7a, 7b) dans une quelconque position articulée.
